# EUROPEAN PATENT APPLICATION

(11) **EP 3 001 406 A1**
(43) Date of publication of application: **30.03.2016**
(21) Application number: 14800403.9
(22) Date of filing: 03.04.2014
(51) Int. Cl.: G09G 5/00, G09G 5/36, G09G 5/377, H04N 5/64

(54) **DISPLAY CONTROL DEVICE, DISPLAY CONTROL METHOD, AND RECORDING MEDIUM**

(30) Priority: 21.05.2013 JP 2013107108
(71) Applicant: Sony Corporation, Tokyo 108-0075 (JP)
(72) Inventor: KASAHARA, Shunichi, Tokyo 108-0075 (JP)
(74) Representative: MFG Patentanwälte Meyer-Wildhagen Meggle-Freund Gerhard PartG mbB
(86) International application number: PCT/JP2014/059860
(87) International publication number: WO 2014/188798

(57) **Abstract**

An object is to achieve a further improvement of the usability of a wearable display (100). There is provided a display control device including: a display control unit configured to control display of a picture on a display unit (110) of a wearable display. The display control unit executes processing of allowing the display unit to display a picture (1102) that blocks a field of view in a real space, and processing of allowing an image (200') in the real space to selectively interrupt the picture when a predetermined trigger is acquired.

## Description

### Technical Field

The present disclosure relates to a display control device, a display control method, and a recording medium.

### Background Art

A wearable display is a display device mounted on the user's head to present a picture to the user's field of view. An example of such a wearable display is disclosed in Patent Literatures 1 and 2, for example.

### Citation List

### Patent Literature

Patent Literature 1: JP 2002-171460A

### Summary of Invention

### Technical Problem

The wearable display has many advantages when compared to a typical display device, and on the other hand, the wearable display may be necessary to meet requirements different from the typical display device in terms of its operation or display. However, technology to meet such requirements is not yet fully developed.

Therefore, according to an embodiment of the present disclosure, there is provided a novel and improved display control device, display control method, and recording medium, capable of achieving a further improvement of the usability of wearable displays.

### Solution to Problem

According to the present disclosure, there is provided a display control device including: a display control unit configured to control display of a picture on a display unit of a wearable display. The display control unit executes processing of allowing the display unit to display a picture that blocks a field of view in a real space, and processing of allowing an image in the real space to selectively interrupt the picture when a predetermined trigger is acquired.

According to the present disclosure, there is provided a display control method including: allowing, by a processor configured to control display of a picture on a display unit of a wearable display, the display unit to display a picture that blocks a field of view in a real space; and allowing, by the processor, an image in the real space to selectively interrupt the picture when a predetermined trigger is acquired.

According to the present disclosure, there is provided a recording medium having a program recorded thereon, the program causing a computer configured to control display of a picture on a display unit of a wearable display to execute: a function of allowing the display unit to display a picture that blocks a field of view in a real space; and a function of allowing an image in the real space to selectively interrupt the picture when a predetermined trigger is acquired.

### Advantageous Effects of Invention

According to the embodiments of the present disclosure as described above, it is possible to achieve a further improvement of the usability of wearable displays.

### Brief Description of Drawings

[FIG. 1] FIG. 1 is a schematic diagram illustrating a system according to a first device configuration example of the present disclosure.
[FIG. 2] FIG. 2 is a block diagram illustrating a schematic functional configuration of the first device configuration example of the present disclosure.
[FIG. 3] FIG. 3 is a diagram illustrated to describe estimation of a spatial relationship between a wearable display and a mobile terminal in the first device configuration example of the present disclosure.
[FIG. 4] FIG. 4 is a block diagram illustrating a schematic functional configuration of a second device configuration example of the present disclosure.
[FIG. 5] FIG. 5 is a diagram illustrated to describe estimation of a spatial relationship between a wearable display and a mobile terminal in the second device configuration example of the present disclosure.
[FIG. 6] FIG. 6 is a block diagram illustrating a schematic functional configuration of a third device configuration example of the present disclosure.
[FIG. 7] FIG. 7 is a schematic diagram illustrating a system according to a fourth device configuration example of the present disclosure.
[FIG. 8] FIG. 8 is a block diagram illustrating a schematic functional configuration of the fourth device configuration example of the present disclosure.
[FIG. 9] FIG. 9 is a diagram illustrating a first example of a scrolling operation according to an embodiment of the present disclosure.
[FIG. 10] FIG. 10 is a diagram illustrating a second example of a scrolling operation according to an embodiment of the present disclosure.
[FIG. 11] FIG. 11 is a diagram illustrating a third example of a scrolling operation according to an embodiment of the present disclosure.
[FIG. 12] FIG. 12 is a diagram illustrating an example of a drag operation according to an embodiment of the present disclosure.
[FIG. 13] FIG. 13 is a diagram illustrating a first example of an enlargement/reduction operation according to an embodiment of the present disclosure.
[FIG. 14] FIG. 14 is a diagram illustrating a second example of an enlargement/reduction operation according to an embodiment of the present disclosure.
[FIG. 15] FIG. 15 is a diagram illustrated to describe an example of reference space according to an embodiment of the present disclosure.
[FIG. 16] FIG. 16 is a diagram illustrated to describe an example of reference space according to an embodiment of the present disclosure.
[FIG. 17] FIG. 17 is a diagram illustrating a display example in the case of employing a reference space for a mobile terminal according to an embodiment of the present disclosure.
[FIG. 18] FIG. 18 is a diagram illustrating a display example in the case of employing a reference space for a mobile terminal according to an embodiment of the present disclosure.
[FIG. 19] FIG. 19 is a diagram illustrating a display example in the case of employing a reference space for a wearable display according to an embodiment of the present disclosure.
[FIG. 20] FIG. 20 is a diagram illustrating a display example in the case of employing a reference space for a wearable display according to an embodiment of the present disclosure.
[FIG. 21] FIG. 21 is a diagram illustrating a display example in the case of employing a reference space for a wearable display according to an embodiment of the present disclosure.
[FIG. 22] FIG. 22 is a diagram illustrating a display example in the case of employing a reference space for the real space according to an embodiment of the present disclosure.
[FIG. 23] FIG. 23 is a diagram illustrating a display example of switching between reference spaces according to an embodiment of the present disclosure.
[FIG. 24] FIG. 24 is a diagram illustrating a first operation example of switching between reference spaces according to an embodiment of the present disclosure.
[FIG. 25] FIG. 25 is a diagram illustrating a second operation example of switching between reference spaces according to an embodiment of the present disclosure.
[FIG. 26] FIG. 26 is a diagram illustrating the second operation example of switching between reference spaces according to an embodiment of the present disclosure.
[FIG. 27] FIG. 27 is a diagram illustrating a display example of a cursor for each reference space according to an embodiment of the present disclosure.
[FIG. 28] FIG. 28 is a diagram illustrating a display example of interruption to a mobile terminal according to an embodiment of the present disclosure.
[FIG. 29] FIG. 29 is a diagram illustrating a display example of interruption to a display picture according to an embodiment of the present disclosure.
[FIG. 30] FIG. 30 is a diagram illustrating another display example of interruption to a display picture according to an embodiment of the present disclosure.
[FIG. 31] FIG. 31 is a diagram illustrating a display example of interruption to a general object according to an embodiment of the present disclosure.

### Description of Embodiments

Hereinafter, (a) preferred embodiment(s) of the present disclosure will be described in detail with reference to the appended drawings. Note that, in this specification and the drawings, elements that have substantially the same function and structure are denoted with the same reference signs, and repeated explanation is omitted.

The description will be made in the following order.
1. Device configuration example
   1-1. First device configuration example
   1-2. Second device configuration example
   1-3. Third device configuration example
   1-4. Fourth device configuration example
2. Example of GUI operation
   2-1. Scrolling operation
   2-2. Drag operation
   2-3. Enlargement/reduction operation
3. Setting of reference space
   3-1. Example of reference space
   3-2. Switching between reference spaces
4. Interruption display from real space
   4-1. Interruption display of mobile terminal
   4-2. Interruption display of display picture
   4-3. Interruption display of general object
5. Supplement

### (1. Device configuration example)

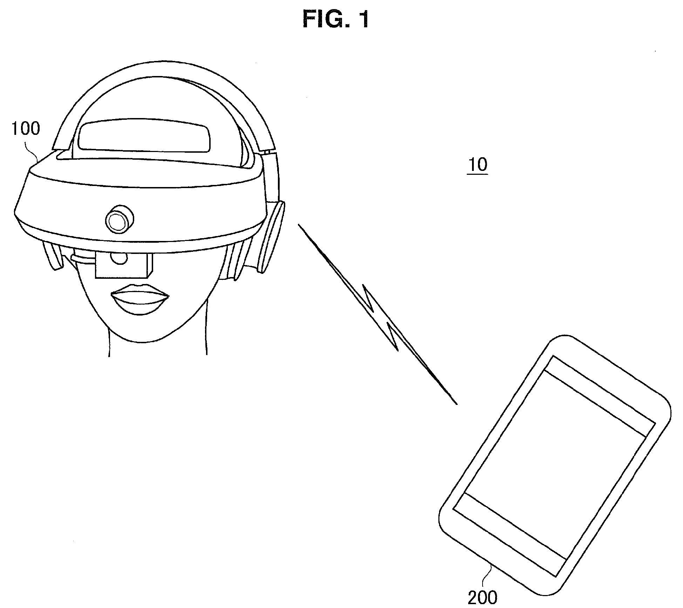

An example of device configurations according to an embodiment of the present disclosure will be described with reference to FIGS. 1 to 8. In embodiments of the present disclosure, device configurations have a large number of variations. Some of these variations are illustrated as first to fourth device configuration examples. These exemplary embodiments are different from each other with respect to association of each processing such as detection of spatial relationship or control of display with a device used to execute the processing, but they are substantially the same with respect to the display or control implemented as the result of the execution. Thus, for example, processing such as control of display, which will be described later, may be implemented similarly in different embodiments.

### (1-1. First device configuration example)

FIG. 1 is a schematic diagram illustrating a system according to a first device configuration example of the present disclosure. Referring to FIG. 1, the system 10 includes a wearable display 100 and a mobile terminal 200.

The wearable display 100 is a display device mounted on the user's head to present a picture to the user's field of view. The wearable display 100 may block the user from viewing the outside and replace it with a picture, as is the case with the illustrated example, or the wearable display 100 may be formed in the shape of a pair of eyeglasses to display a transparent picture to be superimposed on the user's field of view.

The user wearing the wearable display 100 may view a picture with a sense of presence that takes up the majority of the user's field of view. The user observes a picture of the surrounding real space captured by a camera provided in the wearable display 100 or a picture superimposed on an image of the real space observed transparently through the wearable display 100. This allows the user to experience what is called augmented reality (AR). The term "image" as used herein includes, but is not limited to, any appearance of a visually recognizable object. The term "picture" as used herein includes, but is not limited to, presentation projected onto a display unit, for example electronically, to recognize an image.

As described above, the wearable display 100 is advantageous when compared to a typical display device, and on the other hand, the wearable display 100 may be necessary to meet requirements different from the typical display device in terms of, for example, the operation of content or graphical user interface (GUI) displayed on the wearable display 100. As an example, in a typical display device such as the mobile terminal 200, a touch screen may be configured to include a touch sensor placed on a display unit to acquire an operation input by the user when touching a predetermined portion on the display unit. However, the display unit of the wearable display 100 will be positioned near the eye of the user and thus it is difficult to configure such a touch screen.

In some cases, hardware buttons may be disposed on a housing of the wearable display 100, or a pointing means may be additionally connected to the housing. However, unlike a typical display device, the wearable display 100 has advantages that allow the user to change his/her viewing orientation and posture as desired, and thus the increase in the number of devices to be connected may be undesirable. When the wearable display 100 blocks the user from viewing the outside, it is not necessarily easy for the user to accurately operate buttons or the like. An operation technique such as an audio input or gesture control has been recently developed, but such technique will be available in limited circumstances because it is affected by surrounding environments.

In some embodiments of the present disclosure, the mobile terminal 200 is used as an operation means of the wearable display 100. The mobile terminal 200 is located near the wearable display 100 and may be operated by the same user. The mobile terminal 200 may be any terminal device capable of acquiring the user's operation input. An example of the mobile terminal 200 may include smartphones, tablet terminals, and portable game consoles, but it is not limited to a particular type.

The users often use their own terminal device as the mobile terminal 200. In such cases, the user may not prepare an additional operation means. The users may have often experienced use of a touch screen or the like to operate the mobile terminal 200. In such cases, the users are somewhat familiar with the method of operation as described below. Thus, in some embodiments of the present disclosure, the use of the mobile terminal 200 allows a simple means for operating the wearable display 100 to be easily provided.

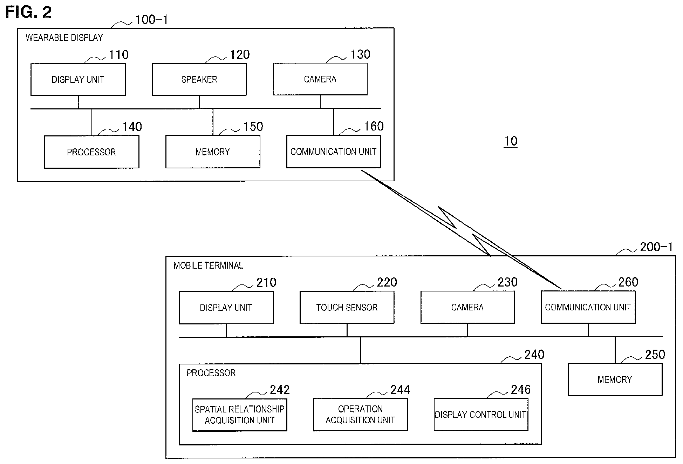

FIG. 2 is a block diagram illustrating a schematic functional configuration of the first device configuration example of the present disclosure. Referring to FIG. 2, a wearable display 100-1 is configured to include a display unit 110, a speaker 120, a camera 130, a processor 140, a memory 150, and a communication unit 160. A mobile terminal 200-1 is configured to include a display unit 210, a touch sensor 220, a camera 230, a processor 240, a memory 250, and a communication unit 260. The functional configuration shown in FIG. 2 is merely illustrative for the purpose of description. The wearable display 100-1 and the mobile terminal 200-1 may further include other functional configurations not shown. The following description is given of the functional configuration of each component.

### (Wearable display)

The display unit 110 may be a liquid crystal display (LCD) or organic light-emitting diode (OLED). The display unit 110 displays various kinds of pictures under the control of the processor 140. As described above, the display unit 110 may block the user's field of view and may display pictures, or may display a transparent picture to be superimposed on the user's field of view. When the display unit 110 blocks the user's field of view, the display unit 110 can display a picture of the surrounding real space captured by the camera 130, which will be described later. Thus, the user can visually recognize a picture of the real space through the display unit 110 in a transparent manner. The display unit 110 may display content or a picture of the real space, and may display a picture of GUI used to control the display of these pictures.

The speaker 120 outputs sound under the control of the processor 140. The speaker 120 allows the user to view content that includes a picture and audio, for example, interlocking with the display unit 110. When the wearable display 100-1 is used to provide only pictures for the user or when a separate speaker from the wearable display 100-1 is prepared including speakers of stationary type, headphone type, and earphone type, the wearable display 100-1 may not be necessarily provided with the speaker 120.

The camera 130 photographs the real space using an image sensor such as a charge-coupled device (CCD) or complementary metal-oxide-semiconductor (CMOS) sensor, and creates a captured image. A series of captured images acquired by the camera 130 may form an image to be projected. The camera 130 may not necessarily be a part of the wearable display 100-1. As one example, the camera 130 may be a separate imaging device that is connected to the wearable display 100-1 in a wireless or wired manner.

The processor 140 may be various kinds of processing circuits such as a central processing unit (CPU) and a digital signal processor (DSP). The processor 140 implements various kinds of functions by executing operations including arithmetic/logical operation and control according to the program stored in the memory 150. In the illustrated example, the processor 140 may control the entire operation of the wearable display 100-1, including display of a picture on the display unit 110, for example, based on information received from the mobile terminal 200-1 via the communication unit 160.

The memory 150 may be storage media such as semiconductor memory. The memory 150 stores a program and data used to allow the wearable display 100 to perform processing. The memory 150 may store the captured image data created by the camera 130 or the GUI image data displayed on the display unit 110. A part of the program and data described later may be acquired from an external data source (for example, data server, network-attached storage, and external memory), instead of being stored in the memory 150.

The communication unit 160 is a communication interface that mediates the communication between the wearable display 100-1 and other devices. The communication unit 160 supports any wireless communication protocol or wired communication protocol, and establishes a communication connection with other devices including the mobile terminal 200-1. In the illustrated example, the communication unit 160 receives information used to control the display on the display unit 110 based on the user operation acquired in the mobile terminal 200-1.

### (Mobile terminal)

The display unit 210 may be an LCD or OLED. The display unit 210 displays various kinds of pictures under the control of the processor 240. As an example described below, when the mobile terminal 200-1 is used as a means for operating the wearable display 100-1, the display unit 210 may display a GUI used to operate the wearable display 100-1. Alternatively, the wearable display 100-1 allows a GUI image to be displayed so that the GUI image is superimposed on the display unit 210 of the mobile terminal 200-1. Thus, when the mobile terminal 200-1 is used as a means for operating the wearable display 100-1, the display unit 210 may not display a picture.

The touch sensor 220 is a sensor that is provided on a display surface of the display unit 210 to acquire a contact of the user with the display surface as an operation input. The touch sensor 220 may be various types of sensors including electrostatic capacitance type and resistive film type. The display unit 210 and the touch sensor 220 may constitute a touch screen display. In this case, when the mobile terminal 200 is used as a means for operating the wearable display 100-1 as described above, the display unit 210 does not display a picture and thus the touch sensor 220 may be used independently.

The camera 230 photographs the real space using an image sensor such as a CCD or a CMOS sensor and creates a captured image. In the illustrated example, when the mobile terminal 200-1 is used as a means for operating the wearable display 100-1, the wearable display 100 is within the angle of view of the captured image that is created by the camera 230. The captured image may be analyzed by the processor 240, which will be described later, to estimate a spatial relationship between the mobile terminal 200-1 and the wearable display 100-1. Alternatively, the camera 230 may be provided with a depth sensor for measuring the distance to a subject for each pixel, and a spatial relationship between the mobile terminal 200-1 and the wearable display 100-1 may be estimated based on depth data outputted from the depth sensor.

The processor 240 may be various kinds of processing circuits such as a CPU and a DSP. The processor 140 implements various kinds of functions by executing operations including arithmetic/logical operation and control according to the program stored in the memory 250. As one example, in the illustrated example, the processor 140 implements each function of a spatial relationship acquisition unit 242, an operation acquisition unit 244, and a display control unit 246.

The spatial relationship acquisition unit 242 estimates a spatial relationship between the wearable display 100-1 and the mobile terminal 200-1, for example, based on the captured image created by the camera 230 and/or the detection result obtained by the sensor. The spatial relationship between the wearable display 100-1 and the mobile terminal 200-1 may be represented in a coordinate system made by setting any one device as a reference. Alternatively, the spatial relationship between the wearable display 100-1 and the mobile terminal 200-1 may be represented in a coordinate system defined in the real space where both devices are present.

The operation acquisition unit 244 acquires information that indicates the user's operation input on the touch sensor 220. More specifically, the information acquired by the operation acquisition unit 244 may be information that indicates whether the user is in contact with the display surface of the display unit 210 and/or the position of contact. The operation acquisition unit 244, which acquires such information in time series, can identify the type of operation inputs including tap, drag, and flick operations. Furthermore, the operation acquisition unit 244 associates the operation input with the spatial relationship between the wearable display 100-1 and the mobile terminal 200-1 acquired by the spatial relationship acquisition unit 242. This allows the information of the user's operation input to include information that indicates a spatial relationship between the wearable display 100-1 and the mobile terminal 200-1 by which the operation input is acquired in addition to the information that indicates a position at which the user is in contact with the display surface.

The display control unit 246 generates information used to control the display of a picture on the wearable display 100-1, based on the user's operation input acquired by the operation acquisition unit 244 and the spatial relationship between the wearable display 100-1 and the mobile terminal 200-1 estimated by the spatial relationship acquisition unit 242. As one example, the display control unit 246 generates information used to control the display of a content image on the wearable display 100-1. This control may include the play/stop and enlargement/reduction of content. As one example, the display control unit 246 may generate information used to control the display of a GUI on the wearable display 100-1. The control of display of a GUI may include a selection or movement of the displayed content icon or a change in the point of view. The information generated by the display control unit 246 is sent to the wearable display 100-1 via the communication unit 260.

The memory 250 may be storage media such as semiconductor memory or a hard disk. The memory 250 stores a program and data used to allow the mobile terminal 200-1 to perform processing. The memory 250 may store the captured image data acquired by the camera 230 or the GUI image data displayed on the display unit 210. In the illustrated example, the processor 240 of the mobile terminal 200-1 controls the display of a picture on the wearable display 100-1, and thus the content or GUI image data to be displayed on the wearable display 100-1 may be stored in the memory 250.

The communication unit 260 is a communication interface that mediates the communication between the mobile terminal 200-1 and other devices. The communication unit 260 supports any wireless communication protocol or wired communication protocol, and establishes a communication connection with other devices including the wearable display 100-1. In the illustrated example, the communication unit 260 may send the information, which is generated by the display control unit 246 implemented by the processor 240, to the wearable display 100-1.

### (Estimation of spatial relationship)

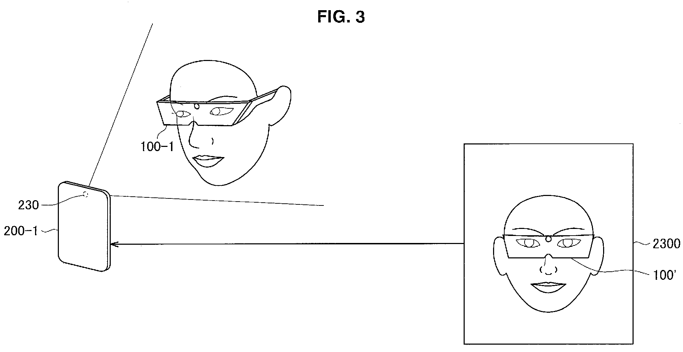

FIG. 3 is a diagram illustrated to describe the estimation of a spatial relationship between the wearable display and the mobile terminal in the first device configuration example of the present disclosure. In the example illustrated in FIG. 3, the spatial relationship acquisition unit 242, which is implemented by the processor 240 of the mobile terminal 200-1, estimates a spatial relationship between the wearable display 100-1 and the mobile terminal 200-1, based on the result obtained by analyzing a captured image 2300 created by the camera 230. In this case, the camera 230 of the mobile terminal 200-1 faces the head of the user wearing the wearable display 100-1. Thus, for example, when the user operates the mobile terminal 200 so that the display unit 210 faces oneself, the camera 230 may be a so-called front-facing camera.

As illustrated, a wearable display 100' mounted on the user's head is projected onto the captured image 2300 created by the camera 230. The spatial relationship acquisition unit 242 recognizes the wearable display 100' as an object, for example, by extracting feature points in the captured image. In addition, the spatial relationship acquisition unit 242 estimates the relative position and posture of the wearable display 100-1 with respect to the camera 230, based on the size and posture of the wearable display 100' in the captured image. Alternatively, the wearable display 100-1 may include an infrared light-emitting element (not shown) installed at a predetermined position of the housing of the wearable display 100-1. Thus, the position and posture of the wearable display 100-1 may be estimated from the position where infrared light is emitted in the captured image created by the camera 230 capable of capturing the infrared region.

Various known techniques can be employed as a technique for recognizing an object contained in the captured image and for estimating the position and posture of the object, and thus the detailed description thereof will be omitted. In the example described above, the detection results obtained by a sensor provided in the wearable display 100-1 or the mobile terminal 200-1 may be used, in addition or alternatively to a captured image. As one example, when the camera 230 is provided with a depth sensor, depth data outputted from the depth sensor may be used in estimating the spatial relationship. The posture of the mobile terminal 200-1 in the real space may be specified based on the detection result obtained by an acceleration sensor or gyro sensor provided in the mobile terminal 200-1, and thus the posture of the wearable display 100-1 in the real space may be estimated by using the specified result as a reference.

### (1-2. Second device configuration example)

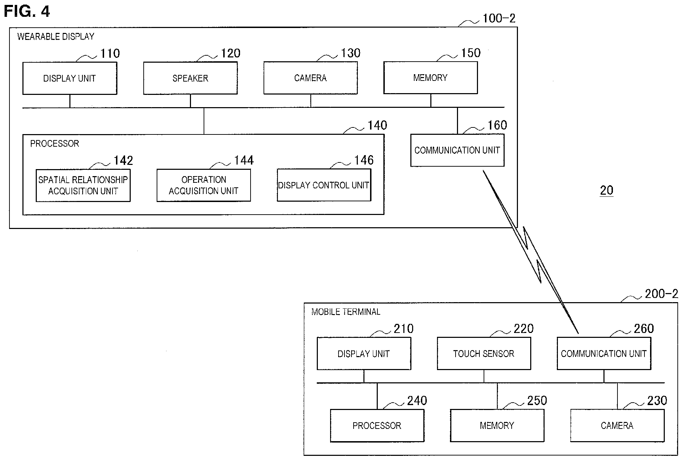

FIG. 4 is a block diagram illustrating a schematic functional configuration of the second device configuration example of the present disclosure. Referring to FIG. 4, a system 20 is configured to include a wearable display 100-2 and a mobile terminal 200-2. The wearable display 100-2 is configured to include a display unit 110, a speaker 120, a camera 130, a processor 140, a memory 150, and a communication unit 160. The mobile terminal 200-2 is configured to include a display unit 210, a touch sensor 220, a camera 230, a processor 240, a memory 250, and a communication unit 260. The functional configuration shown in FIG. 4 is merely illustrative for the purpose of description. The wearable display 100-2 and the mobile terminal 200-2 may further include other functional configurations not shown.

In the illustrated example, unlike the first device configuration example, the processor 140 of the wearable display 100-2 implements functions of a spatial relationship acquisition unit 142, an operation acquisition unit 144, and a display control unit 146. On the other hand, the mobile terminal 200-2 sends information such as an operation input acquired by the processor 240 of the mobile terminal 200-2 to the wearable display 100-2 via the communication unit 260. Other components than those described above are similar to the first device configuration example, and thus detailed description thereof will be omitted.

The spatial relationship acquisition unit 142, which is implemented by the processor 140 of the wearable display 100-2, estimates a spatial relationship between the wearable display 100-2 and the mobile terminal 200-2, based on the captured image created by the camera 130 and/or the detection result obtained by the sensor. This is similar to the spatial relationship acquisition unit 242 according to the first device configuration example.

The operation acquisition unit 144 acquires information that indicates the user's operation input on the touch sensor 220 obtained from the mobile terminal 200-2 via the communication unit 160. The operation acquisition unit 144 associates the user's operation input with the spatial relationship estimated by the spatial relationship acquisition unit 142, which is similar to the operation acquisition unit 244 in the first device configuration example.

The display control unit 146 controls the display of a captured image on the display unit 110, based on the user's operation input acquired by the operation acquisition unit 144 and the spatial relationship between the wearable display 100-2 and the mobile terminal 200-2 estimated by the spatial relationship acquisition unit 142. The display control unit 146 may control the display of a content image or GUI on the display unit 110.

### (Estimation of spatial relationship)

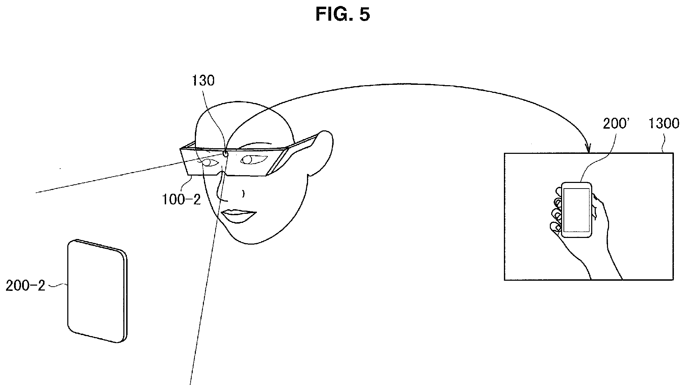

FIG. 5 is a diagram illustrated to describe the estimation of a spatial relationship between the wearable display and the mobile terminal in the second device configuration example of the present disclosure. In the example illustrated in FIG. 5, the spatial relationship acquisition unit 142, which is implemented by the processor 140 of the wearable display 100-2, estimates a spatial relationship between the wearable display 100-2 and the mobile terminal 200-2, based on the result obtained by analyzing a captured image 1300 created by the camera 130. In this case, the camera 130 of the wearable display 100-2 faces the mobile terminal 200-2 held by the user with the hand. Thus, in this case, the user wearing the wearable display 100-2 faces the mobile terminal 200-2.

As illustrated, a mobile terminal 200' is projected onto the captured image 1300 created by the camera 130. The spatial relationship acquisition unit 142 recognizes the mobile terminal 200' as an object, for example, by extracting feature points in the captured image. In addition, the spatial relationship acquisition unit 142 estimates the relative position and posture of the mobile terminal 200-2 with respect to the camera 130, based on the size and posture of the mobile terminal 200' in the captured image. Alternatively, the mobile terminal 200-2 may include an infrared light-emitting element (not shown) installed at a predetermined position of the housing of the mobile terminal 200-2. Thus, the position and posture of the mobile terminal 200-2 may be estimated from the position where infrared light is emitted in the captured image created by the camera 130 capable of capturing the infrared region.

Various known techniques can be employed in estimating a spatial relationship between the wearable display 100-2 and the mobile terminal 200-2 based on the captured image of the camera 130 and the detection result obtained by the sensor included in the wearable display 100-2 or the mobile terminal 200-2 is used in addition or alternatively to the captured image. These are similar to the first device configuration example.

### (1-3. Third device configuration example)

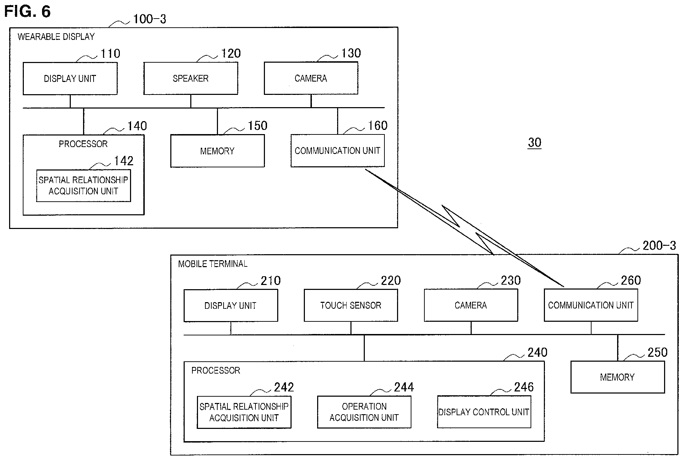

FIG. 6 is a block diagram illustrating a schematic functional configuration of the third device configuration example of the present disclosure. Referring to FIG. 6, a system 30 is configured to include a wearable display 100-3 and a mobile terminal 200-3. The wearable display 100-3 is configured to include a display unit 110, a speaker 120, a camera 130, a processor 140, a memory 150, and a communication unit 160. The mobile terminal 200-3 is configured to include a display unit 210, a touch sensor 220, a camera 230, a processor 240, a memory 250, and a communication unit 260. The functional configuration shown in FIG. 6 is merely illustrative for the purpose of description. The wearable display 100-3 and the mobile terminal 200-3 may further include other functional configurations not shown.

In the illustrated example, similarly to the case with the first device configuration example, the processor 240 of the mobile terminal 200-3 implements functions of a spatial relationship acquisition unit 242, an operation acquisition unit 244, and a display control unit 246. On the other hand, the processor 140 of the wearable display 100-3 implements the function of a spatial relationship acquisition unit 142. The information acquired by the spatial relationship acquisition unit 142 is sent to the mobile terminal 200-3 via the communication unit 160, and is used by the operation acquisition unit 244 and/or the display control unit 246 together with the information acquired by the spatial relationship acquisition unit 242. Other components than those described above are similar to the first device configuration example, and thus detailed description thereof will be omitted.

The process for estimating the spatial relationship between the wearable display 100-3 and the mobile terminal 200-3 by the spatial relationship acquisition unit 142 of the wearable display 100-3 may be similar to the process described above with reference to FIG. 5 in the second device configuration example. The process for estimating the spatial relationship by the spatial relationship acquisition unit 242 of the mobile terminal 200-3 may be similar to the process described above with reference to FIG. 3 in the first device configuration example. The operation acquisition unit 244 and/or the display control unit 246 uses information relating to the spatial relationship estimated by each of the spatial relationship acquisition unit 142 and the spatial relationship acquisition unit 242, and thus it is possible to execute the display control using the spatial relationship with higher accuracy.

### (1-4. Fourth device configuration example)

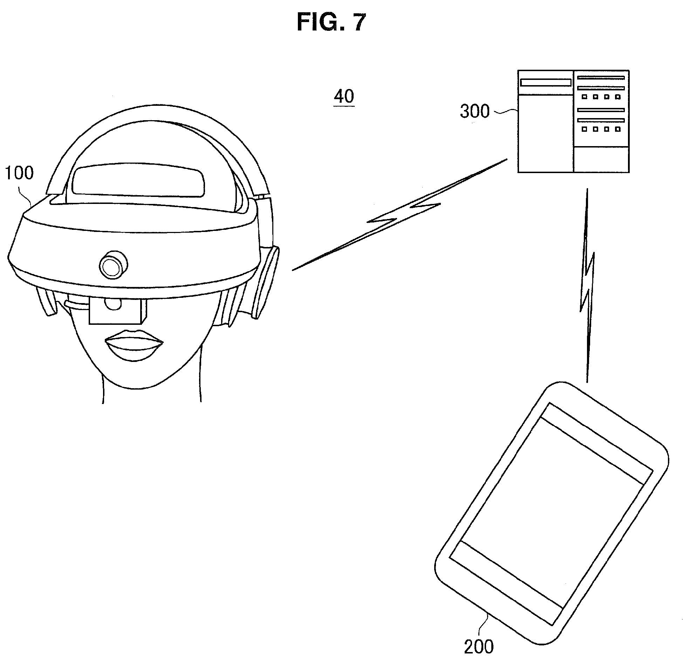

FIG. 7 is a schematic diagram illustrating a system according to a fourth device configuration example of the present disclosure. Referring to FIG. 7, a system 40 is configured to include the wearable display 100, the mobile terminal 200, and a server 300.

In the illustrated example, unlike the first to third device configuration examples, the system 40 includes the server 300. Even in the first to third device configuration examples, the wearable display 100 may communicate with the mobile terminal 200 via a server. In the illustrated example, the server 300 implements a further function, for example, a spatial relationship acquisition unit and an operation acquisition unit.

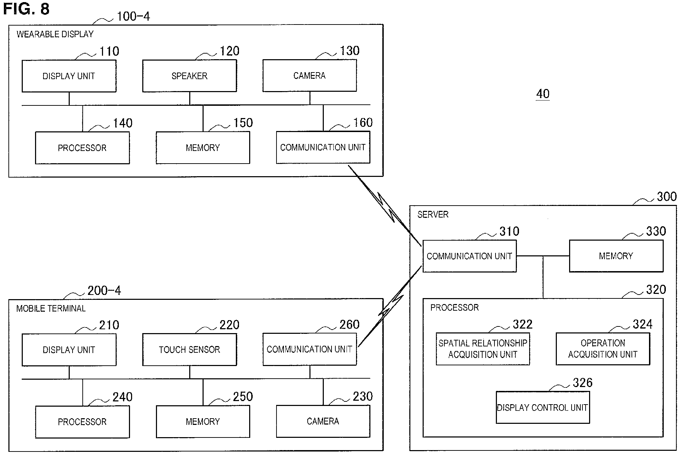

FIG. 8 is a block diagram illustrating a schematic functional configuration of the fourth device configuration example of the present disclosure. Referring to FIG. 8, a wearable display 100-4 is configured to include a display unit 110, a speaker 120, a camera 130, a processor 140, a memory 150, and a communication unit 160. A mobile terminal 200-4 is configured to include a display unit 210, a touch sensor 220, a camera 230, a processor 240, a memory 250, and a communication unit 260. The processors of the wearable display 100-4 and the mobile terminal 200-4 mainly implement control of the entire operation of the device, and send the captured image or detection result obtained by the camera, the touch sensor, or other sensors to the server 300 via the respective communication units.

The server 300 is configured to include a communication unit 310, a processor 320, and a memory 330. The server 300 may be a single server device or an aggregate device of functions implemented by a plurality of server devices connected together in cooperation with each other via a wireless or wired network. The functional configuration shown in FIG. 8 is merely illustrative for the purpose of description. The wearable display 100-4, the mobile terminal 200-4, and the server 300 may further include other functional configurations not shown. The functional configuration of the server 300 will be described. The functional configurations of each of the wearable display 100-4 and the mobile terminal 200-4 are similar to any those in the first to third device configuration examples, thus they are denoted with the common reference numeral, and repeated description is omitted.

The communication unit 310 is a communication interface that mediates the communication between the server 300 and other devices. The communication unit 310 supports any wireless communication protocol or wired communication protocol, and establishes a communication connection with other devices including the wearable display 100-4 and the mobile terminal 200-4. In the illustrated example, the communication unit 310 receives the captured image or the detection result by a sensor from the wearable display 100-4 and/or the mobile terminal 200-4, receives information of operation input performed on the touch sensor 220 from the mobile terminal 200-4, and sends the information created by a display control unit 326, which is implemented by the processor 320, to the wearable display 100-4.

The processor 320 may be various kinds of processors such as a CPU and a DSP. The processor 320 implements various functions by executing operations including arithmetic/logical operation and control according to the program stored in the memory 330. As one example, the processor 320 implements individual functions of a spatial relationship acquisition unit 322, an operation acquisition unit 324, and the display control unit 326.

The spatial relationship acquisition unit 322 estimates a spatial relationship between the wearable display 100-4 and the mobile terminal 200-4. This estimation is performed based on the captured image created by the camera 130 of the wearable display 100-4 and/or the captured image created by the camera 230 of the mobile terminal 200-4, in addition to or as an alternative to the detection result obtained by the sensor. This is similar to the spatial relationship acquisition unit 242 according to the first device configuration example or the spatial relationship acquisition unit 142 according to the second device configuration example.

The operation acquisition unit 324 acquires information indicating the user's operation input on the touch sensor 220 that is obtained from the mobile terminal 200-4 via the communication unit 310. The operation acquisition unit 324 associates information relating to the user's touch operation with the spatial relationship that is estimated by the spatial relationship acquisition unit 322, which is similar to the operation acquisition unit 244 in the first device configuration example or the operation acquisition unit 144 according to the second device configuration example.

The display control unit 326 generates information used to control the display a picture on the wearable display 100-4 based on the user's operation input acquired by the operation acquisition unit 324 and the spatial relationship estimated by the spatial relationship acquisition unit 322. As one example, the display control unit 326 generates information used to control the display of content image or GUI on the wearable display 100-4. The information generated by the display control unit 326 is sent to the wearable display 100-4 via the communication unit 310.

The memory 330 may be storage media such as semiconductor memory and a hard disk. The memory 330 stores a program and data used to allow the server 300 to perform processing. The memory 330 may store captured image data provided from the wearable display 100-4 and/or the mobile terminal 200-4. The memory 330 may store the content or GUI image data to be displayed on the wearable display 100-4.

As described above with reference to four device configuration examples, in an embodiment of the present disclosure, a great number of variations can be made from the device configurations. Such variations are not limited to the examples described above, and for example, the spatial relationship acquisition unit, the operation acquisition unit, and the display control unit can be appropriately distributed to the wearable display 100, the mobile terminal 200, and/or the server 300.

### (2. Example of GUI operation)

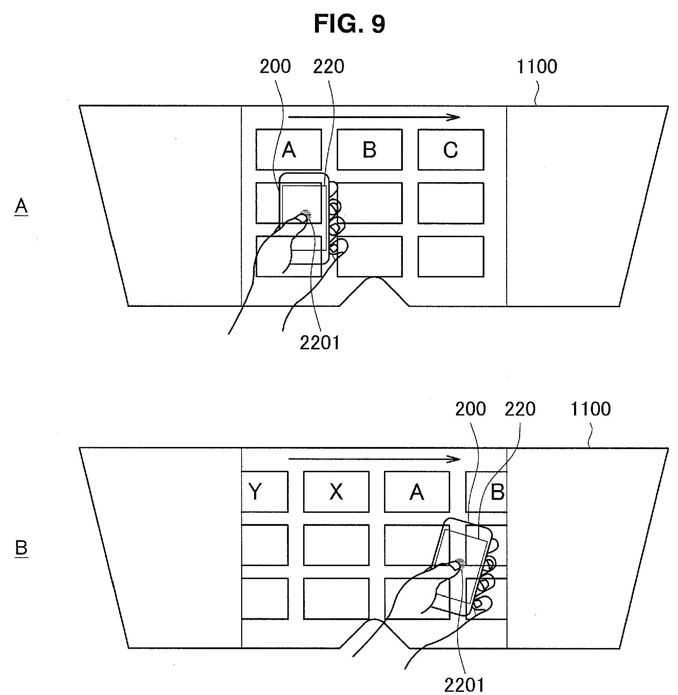

An example of GUI operation according to an embodiment of the present disclosure will be described with reference to FIGS. 9 to 14. The following description is given using the first device configuration example for the sake of simplicity, but as will be apparent from the reference to the description of the device configurations, such GUI operation may be performed similarly in the second to fourth device configuration examples and other device configurations.

### (2-1. Scrolling operation)

### (First example)

FIG. 9 is a diagram illustrating a first example of a scrolling operation according to an embodiment of the present disclosure. In the illustrated example, icons are arranged in a picture 1100 displayed on the display unit 110 of the wearable display 100, and the icons (A to C) are scrolled from the left to the right.

In this case, the user holds the mobile terminal 200 and performs a touch operation 2201 on the touch sensor 220 of the mobile terminal 200. More specifically, the user starts the touch operation 2201 at the start of the scrolling operation shown in FIG. 9A and continues to perform the touch operation 2201 until the scrolling operation shown in FIG. 9B is ended. During this time, the user moves the mobile terminal 200 in the real space from the left to the right in the figure. In other words, it can be said that the user performs a drag operation on the mobile terminal 200 in the real space while continuing to perform the touch operation 2201.

In the above case, the processor 240 of the mobile terminal 200 can detect a change in the positional relationship between the wearable display 100 and the mobile terminal 200 from a change in shape of the wearable display 100' in the image captured by the camera 230. The detection of change in the positional relationship is performed by the function of the spatial relationship acquisition unit 242. In the illustrated example, the processor 240 detects a change in the positional relationship corresponding to a displacement in the left and right directions of the picture 1100 and allows the icons arranged in the picture 1100 to be scrolled depending on the detection result.

An amount of scroll of an icon may correspond to an amount of movement of the mobile terminal 200 when the mobile terminal 200 is transparently displayed on the picture 1100. Alternatively, the amount of scroll may be calculated by increasing or reducing the amount of movement the mobile terminal 200. The mobile terminal 200 may be transparently displayed on the picture 1100 as the illustrated example, or may not be displayed. As one example, there is a case where the angle of view of the camera 230 is wider than the range in the real space that can be displayed on the picture 1100. In this case, even if the mobile terminal 200 is outside the range that can be displayed on the picture 1100, the picture 1100 may be scrolled by the touch operation 2201 on the mobile terminal 200.

In the first example described above, the scrolling on the picture 1100 of the wearable display 100 is controlled based on whether the touch operation 2201 on the mobile terminal 200 is performed and a change in the positional relationship between the mobile terminal 200 and the wearable display 100 due to movement of the mobile terminal 200 while the touch operation 2201 is continuously performed. In this example, the spatial relationship acquisition unit 242 may detect at least the positional relationship between the wearable display 100 and the mobile terminal 200, and may not necessarily detect the posture relationship between the wearable display 100 and the mobile terminal 200.

### (Second example)

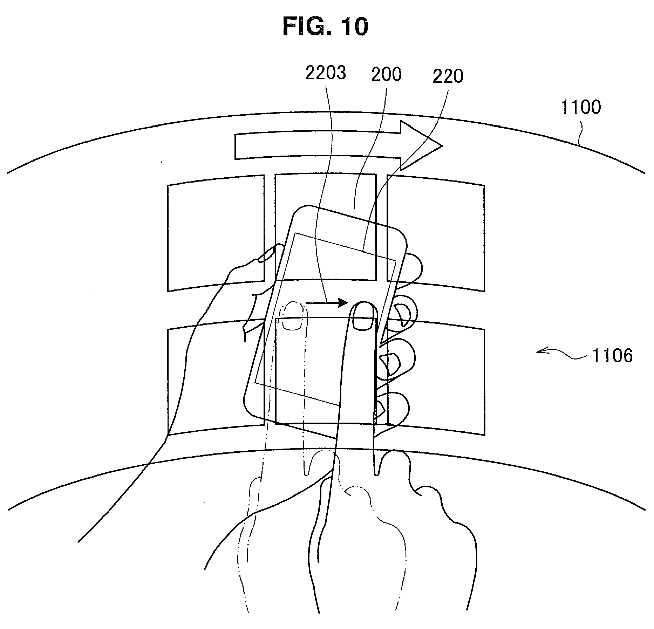

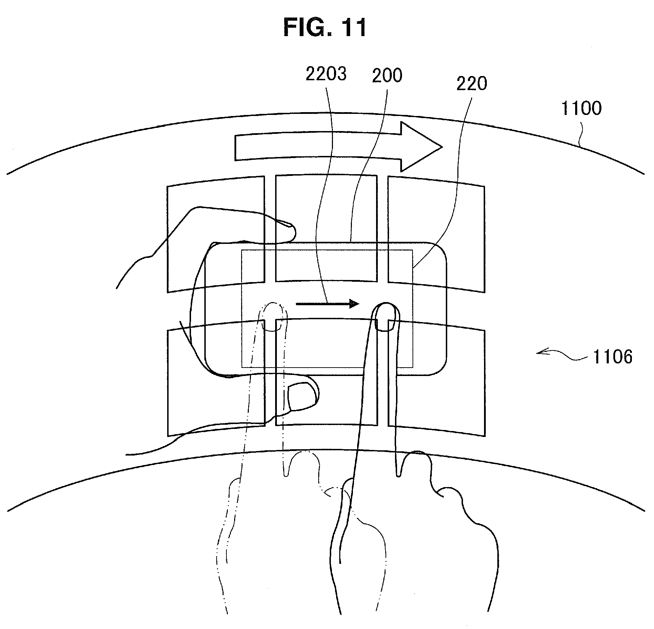

FIGS. 10 and 11 are diagrams illustrating a second example of the scrolling operation according to an embodiment of the present disclosure. In the illustrated example, an object 1106, which is placed in the picture 1100 displayed on the display unit 110 of the wearable display 100, is scrolled from the left to the right.

In this case, the user holds the mobile terminal 200 with one hand and performs the drag operation 2203 on the touch sensor 220 of the mobile terminal 200 with the other hand (the holding and drag operation may be also performed with the same hand). The processor 240 of the mobile terminal 200 acquires the direction or amount of the drag operation on the touch sensor 220 by the function of the operation acquisition unit 244 and detects the posture relationship between the wearable display 100 and the mobile terminal 200 by the function of the spatial relationship acquisition unit 242. This allows the direction of the drag operation 2203 with respect to the touch sensor 220 of the mobile terminal 200 when the wearable display 100 is set as a reference to be specified.

More specifically, in the example shown in FIG. 10, the drag operation 2203 is executed in the crosswise direction with respect to the touch sensor 220, that is, substantially width direction of the mobile terminal 200 in the state where the mobile terminal 200 is in the portrait mode as viewed from the wearable display 100. On the other hand, in the example shown in FIG. 11, the drag operation 2203 is executed in the horizontal direction with respect to the touch sensor 220, that is, substantially longitudinal direction of the mobile terminal 200 in the state where the mobile terminal 200 is in the landscape mode as viewed from the wearable display 100. However, in either case, the posture relationship between the wearable display 100 and the mobile terminal 200 is detected by the spatial relationship acquisition unit 242 and the display control unit 246 changes the operation direction based on the posture relationship, thereby executing the display control that allows the object 1106 to be scrolled in the left and right directions of the picture 1100.

The amount of scroll of the object 1106 may correspond to an amount of operation of the drag operation 2203 acquired in the mobile terminal 200. Alternatively, the amount of scroll may be calculated by enlarging or reducing the amount of operation of the drag operation 2203. The mobile terminal 200 may be transparently displayed on the picture 1100 as the illustrated example, or may not be displayed. As one example, there is a case where the angle of view of the camera 230 is wider than the range of the real space that can be displayed on the picture 1100. In this case, even if the mobile terminal 200 is outside the range that can be displayed on the picture 1100, the picture 1100 may be scrolled by the drag operation 2203 on the mobile terminal 200.

In the second example described above, the drag operation 2203 on the mobile terminal 200 is converted into the scrolling operation on the picture 1100 of the wearable display 100 based on the posture relationship between the wearable display 100 and the mobile terminal 200. In this example, the spatial relationship acquisition unit 242 may detect at least the posture relationship between the wearable display 100 and the mobile terminal 200, and may not necessarily detect the positional relationship between the wearable display 100 and the mobile terminal 200.

### (2-2. Drag operation)

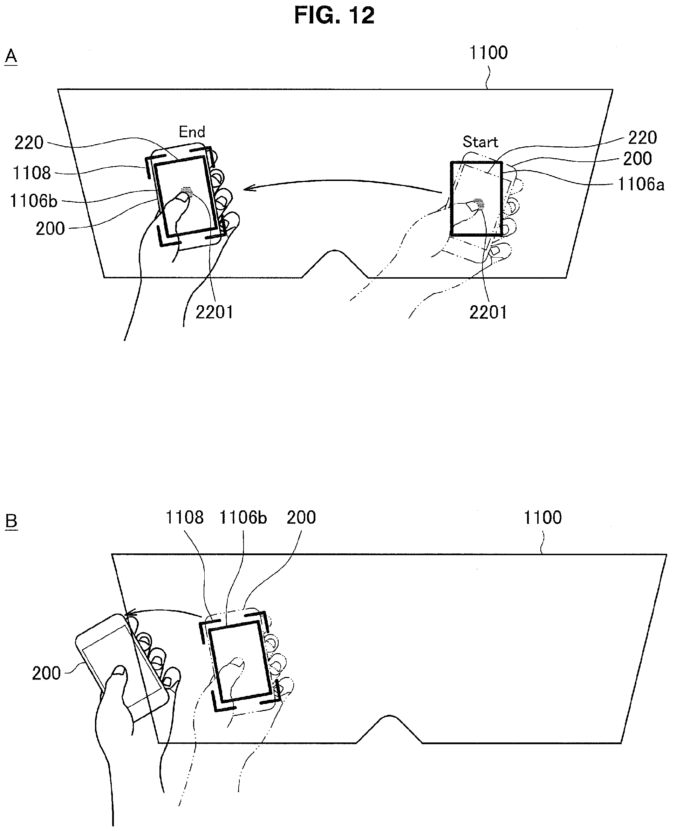

FIG. 12 is a diagram illustrating an example of the drag operation according to an embodiment of the present disclosure. In the illustrated example, an object 1106a positioned on the right is moved to an object 1106b by being dragged to the left across the picture 1100 displayed on the display unit 110 of the wearable display 100.

At this time, as shown in FIG. 12A, the user holds the mobile terminal 200 and starts a touch operation 2201 on the touch sensor 220 in the state where the touch sensor 220 (or the display unit 210) of the mobile terminal 200 is superimposed on the object 1106a. When the user moves the mobile terminal 200 in the real space from the left to the right in the figure while continuously performing the touch operation 2201, the object 1106 is moved within the picture 1100 depending on the change in position of the mobile terminal 200 as viewed from the wearable display 100.

Furthermore, the user ends the touch operation 2201 when the object 1106 is moved to a desired position. Then, the object 1106 is dropped at the position corresponding to the mobile terminal 200 within the picture 110 and then becomes the object 1106b. At this time, the selection of the object 1106b being dropped may be displayed using a cursor 1108. The object 1106b is still placed in the picture 1100 after the touch operation 2201 is ended, and thus it is also possible for the mobile terminal 200 to be out from the range of the picture 1100 by causing the mobile terminal 200 to be further moved, as illustrated in FIG. 12B.

In the illustrated example, after the drag operation is started, an inclination of the object 1106 in the picture 1100 is matched to an inclination of the touch sensor (or the display unit 210) of the mobile terminal 200. Thus, in this example, the spatial relationship acquisition unit 242 detects the positional relationship and posture relationship between the wearable display 100 and the mobile terminal 200. In other examples, when the inclination of the object 1106 is determined to be independent of the mobile terminal 200 (for example, the inclination of the object 1106 is fixed throughout the dragging operation), the spatial relationship acquisition unit 242 may not necessarily detect the posture relationship between the wearable display 100 and the mobile terminal 200.

In the drag operation described above, the mobile terminal 200 may be displayed transparently on the picture 1100 as the illustrated example, or may not be displayed. When the mobile terminal 200 is not displayed on the picture 1100, any other cursors may be displayed by being interlocked with the position of the mobile terminal 200 to allow the user to recognize the start and end time points of the drag operation.

### (2-3. Enlargement/reduction operation)

### (First example)

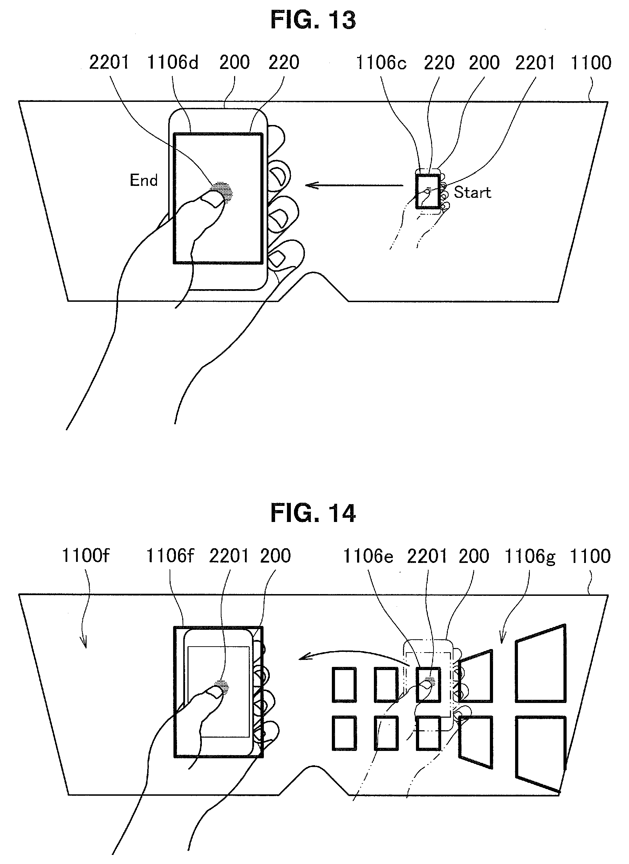

FIG. 13 is a diagram illustrating a first example of enlargement/reduction operation according to an embodiment of the present disclosure. In the illustrated example, in the picture 1100 displayed on the display unit 110 of the wearable display 100, a small object 1106c is enlarged to become a large object 1106d.

In this case, the user holds the mobile terminal 200 on the far side as viewed from the wearable display 100, and starts the touch operation 2201 on the touch sensor 220 in the state where the touch sensor 220 (or the display unit 210) of the mobile terminal 200 is superimposed on the object 1106c. When the user moves the mobile terminal 200 in the real space from the far side to the near side while continuously performing the touch operation 2201, the object 1106 is enlarged within the picture 1100 depending on the change in size of the mobile terminal 200 as viewed from the wearable display 100.

Moreover, the user ends the touch operation 2201 when the object 1106 is enlarged to a desired size. Then, the object 1106 is dropped at that size and becomes the object 1106d. At this time, the selection of the object 1106d being dropped may be displayed using a cursor (not shown). In the illustrated example, the enlargement/reduction of the object 1106 and the movement of the object 1106 by the drag operation may be executed simultaneously. Alternatively, a component in the depth direction from the change in position of the mobile terminal 200 is extracted and only the enlargement/reduction of the object 1106 may be executed.

In the illustrated example, although the object 1106 on the picture 110 is coincident in size with the touch sensor 220 (or the display unit 210) of the mobile terminal 200 as viewed from the wearable display 100, it may not necessarily be the case. In other words, in the enlargement/reduction, at least only part of the object 1106 may be superimposed on the touch sensor 220 (or the display unit 210). The resulting magnification of enlargement/reduction of the object 1106 may be determined based on the ratio between the size of the touch sensor 220 (or the display unit 210) as viewed from the wearable display 100 at the time of starting the touch operation 2201 and the current size.

In the enlargement/reduction operation described above, the mobile terminal 200 may be displayed transparently on the picture 1100 as illustrated example, or may not be displayed. When the mobile terminal 200 is not displayed on the picture 1100, any other cursors may be displayed interlocking with the position of the mobile terminal 200 to allow the user to recognize the object to be enlarged/reduced or the magnification of enlargement/reduction. At this time, a cursor may be displayed together with, for example, the change in size of the cursor itself, a grid in the depth direction, or effects for representing the position of the depth direction such as shading.

### (Second example)

FIG. 14 is a diagram illustrating a second example of the enlargement/reduction operation according to an embodiment of the present disclosure. In the illustrated example, in the picture 1100 displayed on the display unit 110 of the wearable display 100, a small object 1106e displayed in a group of icons 1106g is enlarged to become a large object 1106f displayed in a free space 1100f.

In this case, the user holds the mobile terminal 200 and starts the touch operation 2201 on the touch sensor 220 in the state where the touch sensor 220 (or the display unit 210) of the mobile terminal 200 is superimposed on the object 1106e. When the user moves the mobile terminal 200 in the real space while continuously performing the touch operation 2201, the object 1106 is moved within the picture 1100 depending on the change in position of the mobile terminal 200 as viewed from the wearable display 100.

Furthermore, in the illustrated example, the size of the object 1106 is changed with the movement of the object 1106 within the picture 1100. More specifically, the small object 1106 displayed in the display region of the group of icons 1106g is moved to the free space 1100f and then its size is enlarged to be displayed as a large one. In other words, in this example, the enlargement/reduction of the object 1106 is indirectly implemented with the movement within the picture 1100 through the operation of the mobile terminal 200. In this example, the magnification of enlargement/reduction of the object 1106 may be set in advance depending on the region where the object 1106 is displayed within the picture 1100.

In the enlargement/reduction operation described above, the mobile terminal 200 may be displayed transparently on the picture 1100 as illustrated example, or may not be displayed. When the mobile terminal 200 is not displayed on the picture 1100, any other cursors may be displayed by being interlocked with the position of the mobile terminal 200 to allow the user to recognize the object to be enlarged/reduced. The size of the picture or cursor of the mobile terminal 200 to be displayed may be allowed to be changed with the predetermined magnification of the object 1106 displayed within the picture 1100.

### (3. Setting of reference space)

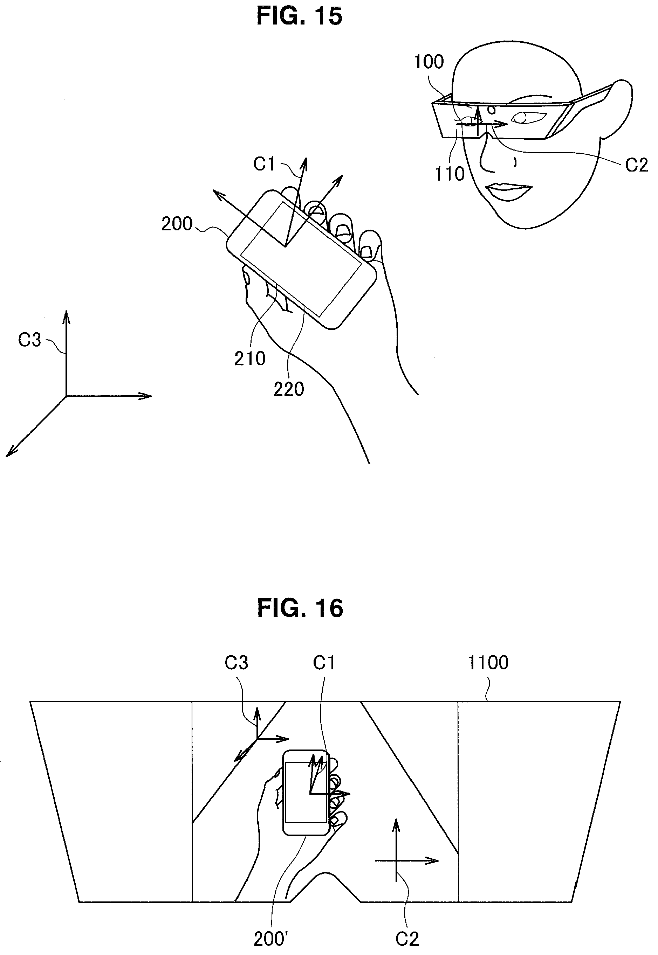

The setting example of reference space according to an embodiment of the present disclosure will be described with reference to FIGS. 15 to 27. The following description is also given using the first device configuration example for the sake of simplicity, but as will be apparent from the reference to the description of the device configurations, such setting may be performed similarly in the second to fourth device configuration examples and other device configurations.

### (3-1. Example of reference space)

FIGS. 15 and 16 are diagrams illustrated to describe an example of reference space according to an embodiment of the present disclosure. In some embodiments of the present disclosure, the display control unit allows the picture in which an object is placed in the reference space to be displayed on the display unit 110 of the wearable display 100. The object to be displayed may be an icon to be displayed in the GUI.

In the illustrated example, the display control unit selects a reference spaced in which an object is placed from among a plurality of candidates. There are illustrated reference spaces C1, C2, and C3 as a reference space to be a candidate. FIG. 15 is a diagram representing these reference spaces from an independent point of view, and FIG. 16 is a diagram representing these reference spaces from the point of view of the wearable display 100.

The reference space C1 is a reference space that is set by using an operation surface of the touch sensor 220 of the mobile terminal 200 or a display surface of the display unit 210 as a reference. In the illustrated example, the reference space C1 is defined as a three-dimensional space in which the operation surface (or the display surface) is set to the base plane (the plane including x-axis and y-axis) and the direction perpendicular to the operation surface (or the display surface) is set to the depth direction (x-axis direction). The position or posture of the object placed in the reference space C1 in the display on the display unit 110 is changed with a change in position or posture of the mobile terminal 200.

The reference space C2 is a reference space that is set by using a display surface of the display unit 110 of the wearable display 100 or a virtual display screen that is displayed by the display unit 110 as a reference. In the illustrated example, the reference space C2 is defined as a two-dimensional space (a plane) in which the display surface (or the virtual screen) is set to the base plane (the plane including x-axis and y-axis). The object placed in the reference space C2 in the display on the display unit 110 is continuously displayed at the same position on the display unit 110 regardless of the position or posture of the wearable display 100 or the mobile terminal 200 as long as any additional operation is not performed.

The reference space C3 is the real space (environmental space) in which the wearable display 100 and the mobile terminal 200 are present. In the illustrated example, the reference space C3 is defined as a three-dimensional space in which the position is defined independently from the wearable display 100 and the mobile terminal 200. The object placed in the reference space C3 in the display on the display unit 110 is continuously displayed at the same position in relation to the real space even when the viewpoint with respect to the display unit 110 is changed with a change in position or posture of the wearable display 100.

A display example on the wearable display 100 in the case of employing each reference space will be further described.

### (Reference space for mobile terminal)

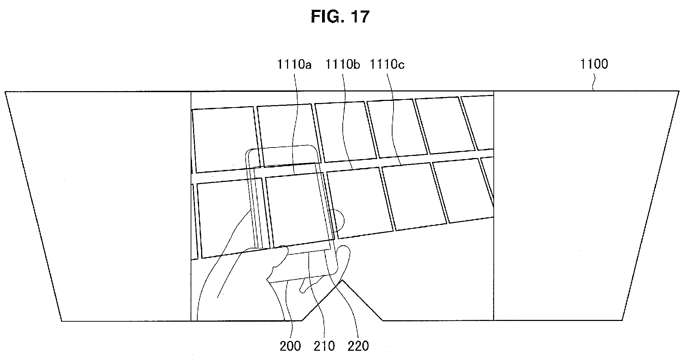

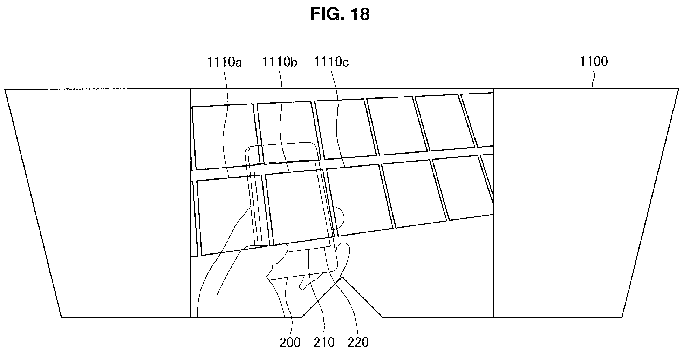

FIGS. 17 and 18 are diagrams illustrating a display example in the case of employing a reference space for the mobile terminal (reference space C1 as described above) according to an embodiment of the present disclosure. In the illustrated example, in the picture 1100 displayed on the display unit 110 of the wearable display 100, a plurality of windows 1110 are arranged on a base plane of the reference space C1. As described above, the base plane of the reference space C1 is substantially coincident with the operation surface (or the display surface of the display unit 210) of the touch sensor 220 of the mobile terminal 200, and thus the window 1110 may provide a GUI in which the operation surface (or the display surface) is extended virtually.

As one example, in the case where windows 1110a, 110b, and 1110c are displayed as shown in FIG. 17, when the user executes the drag operation in the left and right direction in the figure with respect to the touch sensor 220 of the mobile terminal 200, the window 1110 is moved along the direction of the drag operation and then is displayed, as shown in FIG. 18. In FIG. 17, the window 1110a is displayed in a superimposed manner on the touch sensor 220. In FIG. 18, the adjacent window 1110b is displayed in a superimposed manner on the touch sensor 220.

In the display of the example described above, when the posture of the mobile terminal 200 is changed in the real space, the window 1110 being displayed on the wearable display 100 is moved in accordance with the base plane of the reference space C1 defined by the operation surface (or the display surface of the display unit 210) of the touch sensor 220 of the mobile terminal 200 after the posture is changed. Such a display in the reference space C1 allows the user to easily recognize the relationship between the operation on the mobile terminal 200 and the change in the picture displayed on the wearable display 100.

As one example, in the drag operation described with reference to FIG. 12 or the enlargement/reduction operation described with reference to FIG. 13, the placement of the object 1106 in the reference space C1 during the selection of the object 1106 by the touch operation 2201 allows the movement or deformation of the object 1106 in accordance with the change in position of the mobile terminal 200 to be easily recognized.

### (Reference space for wearable display)

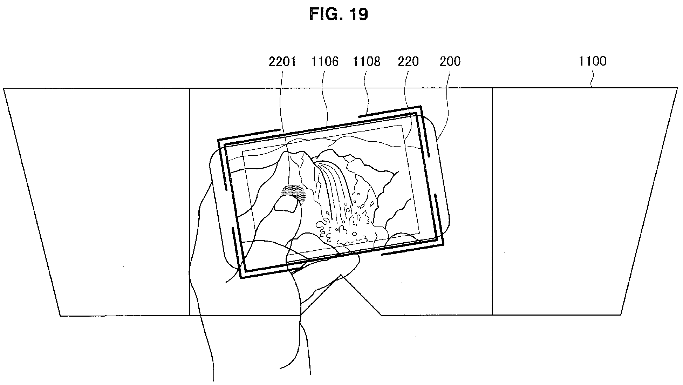

FIGS. 19 to 21 are diagrams illustrating a display example in the case of employing a reference space for the wearable display (reference space C2 as described above) according to an embodiment of the present disclosure. In the illustrated example, in the picture 1100 displayed on the display unit 110 of the wearable display 100, the object 1106 (a thumbnail of the picture in this example) is placed on a base plane of the reference space C2. As illustrated in FIG. 19, the touch operation 2201 is started on the touch sensor 220 of the mobile terminal 200 in the state where the mobile terminal 200 being displayed transparently on the picture 1100 is superimposed on the object 1106, the object 1106 is moved within the picture 1101 along with the mobile terminal 200 being displayed transparently.

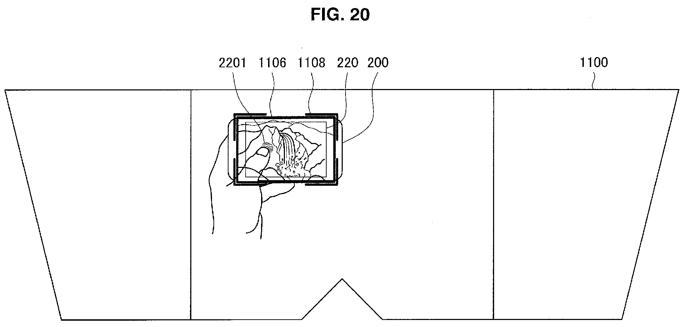

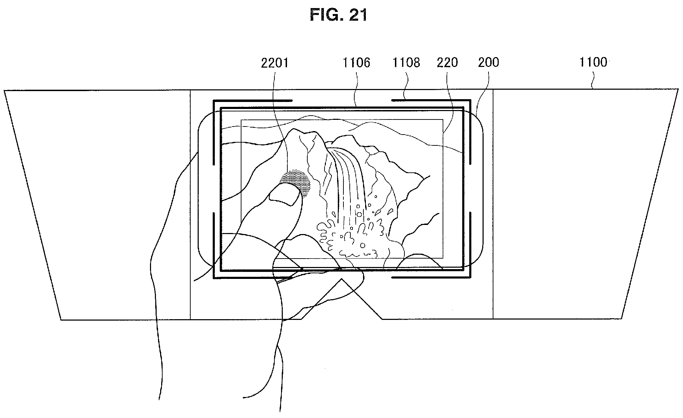

FIG. 20 is a continuation of FIG. 19, illustrating a state in the middle when the object 1106 is moved. In the state shown in FIG. 20, the mobile terminal 200 is moved away in the depth direction and the mobile terminal 200, which is displayed transparently on the picture 1100, becomes small, and accordingly, the object 1106 is reduced. Furthermore, FIG. 21 is a continuation of FIG. 20, illustrating the state where the mobile terminal 200 is returned to the front and the mobile terminal 200, which is displayed transparently on the picture 1100, becomes large, and accordingly, the object 1106 is enlarged. As shown in FIG. 21, when the object 1106 is moved and is placed sufficiently near the display unit 110, the content corresponding to the object 1106 may be automatically displayed in a full screen view.

In the series of movement procedures shown in FIGS. 19 to 21 as above, the object 1106 is moved depending on the position of the mobile terminal 200 being transparently displayed on the picture 1100, and is enlarged or reduced depending on the size of the mobile terminal 200 being displayed. However, in this example, the object 1106 is displayed in the reference space C2 that is a two-dimensional space in which a display surface of the display unit 110 of the wearable display 100 or a virtual display screen displayed by the display unit 110 is set to a base plane. Thus, in the above example, the object 1106 is not displayed in a three-dimensionally deformed shape in accordance with the posture of the mobile terminal 200.

Such a display in the reference space C2 allows the user to easily recognize that a target to be operated is the picture displayed on the wearable display 100. For example, in the drag operation described with reference to FIG. 12 or the enlargement/reduction operation described with reference to FIG. 13, when the object 1106 is placed in the reference space C2 while the object 1106 is not selected without use of the touch operation 2201, it is may possible to easily recognize that the object 1106 is fixed on the display unit 110.

### (Reference space for real space)

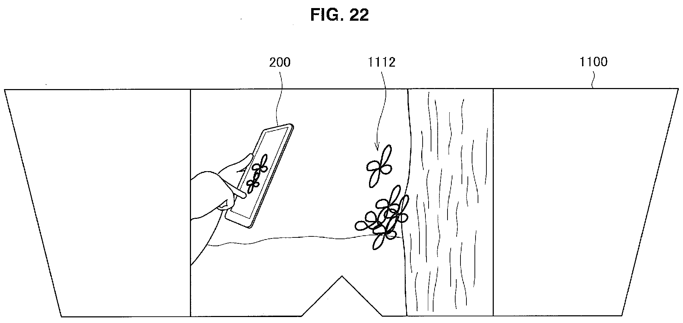

FIG. 22 is a diagram illustrating a display example in the case of employing a reference space for the real space (the reference space C3) according to an embodiment of the present disclosure. In the illustrated example, in the picture 1100 displayed on the display unit 110 of the wearable display 100, an object 1112 is placed in the reference space C3. As described above, the reference space C3 is the real space (environmental space) in which the wearable display 100 and the mobile terminal 200 are present. Thus, the object 1112 may be placed at the same position regardless of the position or posture of the wearable display 100 or the mobile terminal 200.

As one example, when the drag operation described above with reference to FIG. 12 is repeatedly performed on the object 1112 displayed in the reference space C3 as described above, it is also possible to perform an operation such as the turning of the object through 360 degrees about the user. In this case, the object 1112 undergoes a transition to the reference space C1 when it is selected by the operation on the mobile terminal 200, and is moved along with the movement of the mobile terminal 200 in the reference space for the real space. When the selection is released, the object 1112 undergoes a transition again to the reference space C3 and is independent of the position of the wearable display 100 and the mobile terminal 200. The wearable display 100 is moved in this state (the mobile terminal 200 may not be moved) and then a similar drag operation is executed, and thus it is possible to move continuously the object 1112.

### (3-2. Switching between reference spaces)

As described above, in some embodiments of the present disclosure, it is possible to switch between reference spaces in which an object is placed depending on the operation state on the object. In this case, an object is displayed while undergoing a transition between different reference spaces. In the following description will be given of an operation used to switch between reference spaces as described above and the resulting display example.

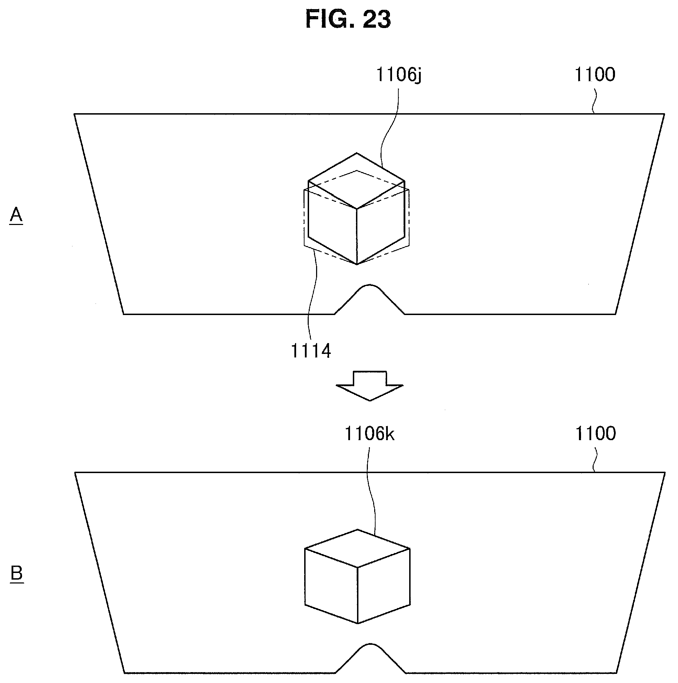

FIG. 23 is a diagram illustrating a display example of switching between reference spaces according to an embodiment of the present disclosure. In this example, as illustrated in FIG. 23A, in the picture 1100 displayed on the display unit 110 of the wearable display 100, an object 1106j displayed in a reference space is represented as an extended graphic 1114 that indicates a shape in the case where it is displayed in a different reference space. The extended graphic 1114 may be represented, for example, when the position at which the object 1106j is displayed on the picture 1100 is superimposed on the position at which it is displayed in a different reference space. In this case, when a predetermined operation (for example, a touch operation or a press-and-hold operation on the touch sensor 220 of the mobile terminal 200) is obtained, the object 1106j is changed into an object 1106k that is displayed in different reference space, as shown in FIG. 23B.

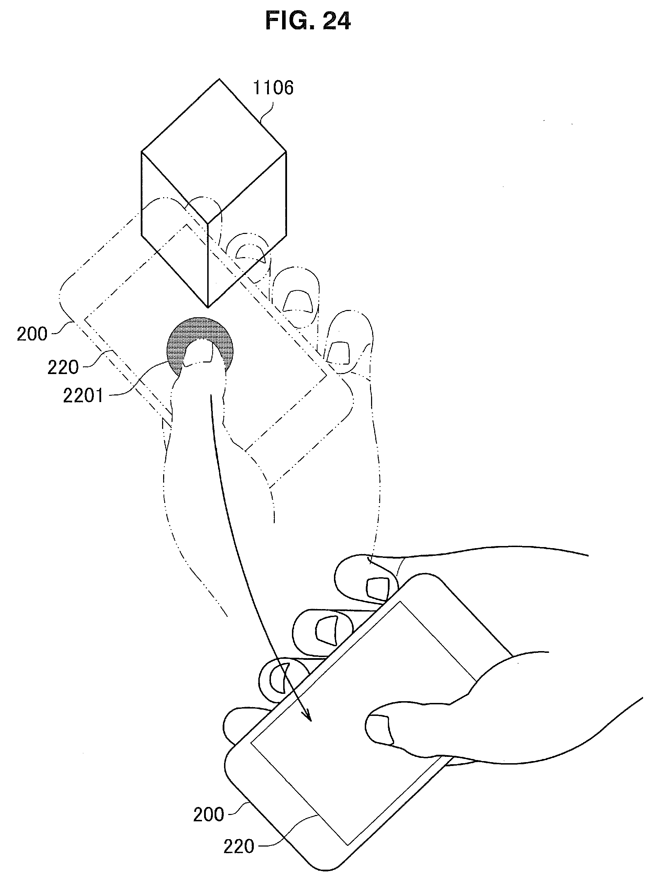

FIG. 24 is a diagram illustrating a first operation example of switching between reference spaces according to an embodiment of the present disclosure. In the illustrated example, the object 1106, which is displayed in the reference space C1 (the space set by using the mobile terminal 200 as a reference), undergoes a transition to the reference space C3 (real space) when the touch operation 2201 on the touch sensor 220 of the mobile terminal 200 is ended, and is placed in the space away from the mobile terminal 200.

A display similar to that described above may be applied to the above-mentioned drag operation. In the example shown in FIG. 12B, at the end of the touch operation 2201, the object 1106, which is moved together with the mobile terminal 200 placed in the reference space C1, undergoes a transition to the reference space C2 and is placed in the picture 1100 as the object 1106b away from the mobile terminal 200.

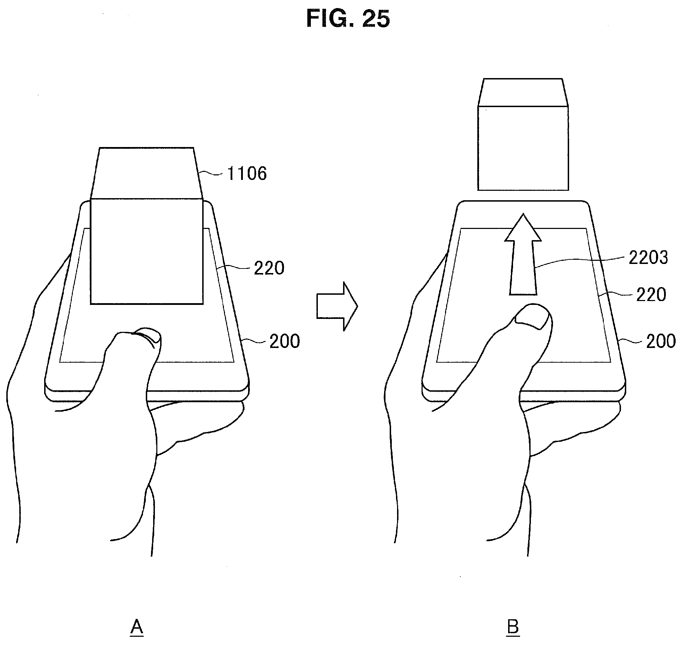

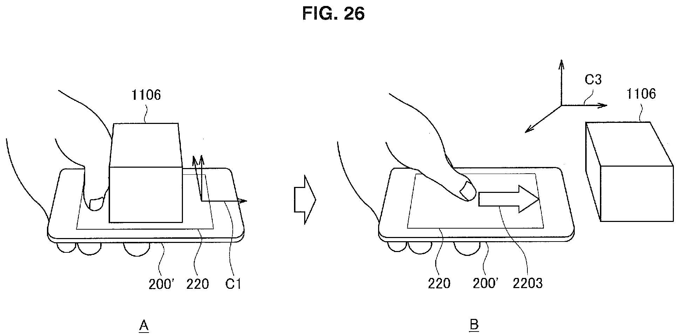

FIGS. 25 and 26 are diagrams illustrating a second operation example of switching between reference spaces according to an embodiment of the present disclosure. In the illustrated example, the object 1106, which is displayed in the above reference space C1 (the space set by using the mobile terminal 200 as a reference) undergoes a transition to the reference space C3 (real space) by the drag operation 2203 on the touch sensor 220 of the mobile terminal 200 and is placed in the space away from the mobile terminal 200. At this time, after the object 1106 undergoes a transition from the reference space C1 to the reference space C3, the object 1106 is moved slightly by effects such as sliding on the mobile terminal 200 by the drag operation and then may be fixed.

Although the switching between two reference spaces has been described in the above example, this may be applied to the switching between three reference spaces. In the example shown in FIGS. 25 and 26, for example, when an operation such as tap or double-tap operation may be executed instead of the drag operation 2203 on the touch sensor 220, the object 1106 may undergo a transition to the reference space C3 (the space that is set using the wearable display 100 as a reference) instead of a transition from the reference space C1 to the reference space C3. In this way, when there are multiple candidates in a reference space of the transition destination, the reference space of the transition destination may be determined by the kinds of the operation executed on the touch sensor 220.

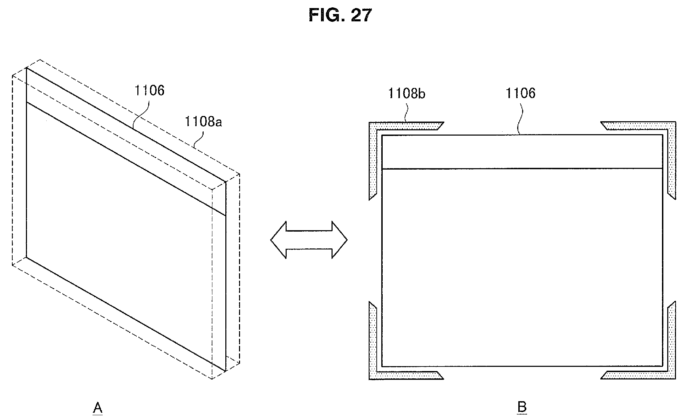

FIG. 27 is a diagram illustrating a display example of a cursor for each reference space according to an embodiment of the present disclosure. As described above, in some embodiments of the present disclosure, a reference space in which an object may be displayed may be selected from among a plurality of candidates. Thus, for example, in the display on the picture 1100, it may be useful to represent a reference space in which an object is to be placed.

FIG. 27A illustrates a cursor 1108a when the object 1106 is placed in a three-dimensional space including the reference space C1 or the reference space C3. The cursor 1108a may be displayed as a shape including a box that encompasses three-dimensionally the plate-like icon 1106. On the other hand, FIG. 27B illustrates a cursor 1108b when the object 1106 is placed in a two-dimensional space including the reference space C2. The cursor 1108b may be displayed as a figure that surrounds the corner portion of the icon 1106 displayed as an area on a plane.

Moreover, a reference space in which the object 1106 is placed may be represented using display effects such as color or texture of the object 1106 or the cursor 1108. A space in which the object 1106 is placed may be represented by an icon to be displayed near the object 1106.

### (4. Interruption display from real space)

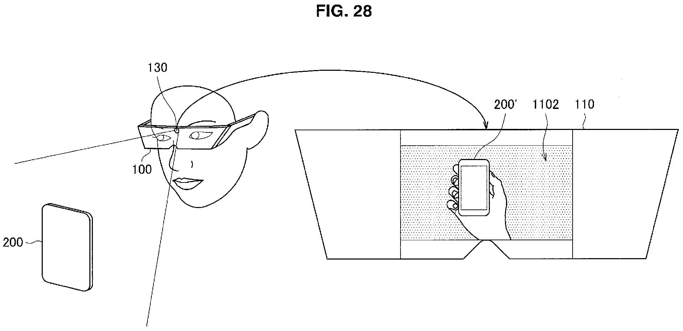

An interruption display from the real space according to an embodiment of the present disclosure will be described with reference to FIGS. 28 to 31. The following description is given using the first device configuration example for the sake of simplicity, but as will be apparent from the reference to the description of the device configurations, a similar display may be performed in the second to fourth device configuration examples and other device configurations.

In some embodiments of the present disclosure, as the above-mentioned examples, the wearable display 100 is operated using the mobile terminal 200. In this case, there is a case where the user easily operates the wearable display 100 by allowing the user to visually recognize the position and posture of the mobile terminal 200 in the real space at least temporarily or the operation state on the touch sensor 220 of the mobile terminal 200 even when content or a GUI image is displayed in the state where the field of view of the user is typically blocked in the wearable display 100.

In another embodiment, the mobile terminal 200 is not necessarily used for the operation of the wearable display 100. When content or a GUI image is displayed in the state where the field of view of the user is blocked in the wearable display 100, if there is an incoming message in the mobile terminal 200, the mobile terminal 200 or the picture displayed on the mobile terminal 200 may be desired to be checked without disconnecting the wearable display 100 or interrupting the display of a picture.

In the following example, in the case as described above, if the field of view of the user is blocked and a picture is displayed in the wearable display 100, a picture is selectively interrupted by an image in the external real space. An image in the real space may be any image of an object from which some information is achievable through the visual recognition by the user, in addition to a picture displayed on the mobile terminal 200 or the display unit 210 of the mobile terminal 200.

When a picture is interrupted by an image in the real space, the picture in the real space, which is extracted from the captured image created by the camera 130, may be displayed in place of at least a portion of the picture such as content or may be displayed in a superimposed manner on at least a portion of a picture such as content, or an external image in the real space may be transmitted by partially increasing the transmittance of a picture such as content.

### (4-1. Interruption display of mobile terminal)

FIG. 28 is a diagram illustrating an example of the interruption display of the mobile terminal according to an embodiment of the present disclosure. In the illustrated example, when a content picture 1102 that blocks the field of view of the user is displayed on the display unit 110 of the wearable display 100, the picture is displayed as being interrupted by the mobile terminal 200'.

The mobile terminal 200' is the picture displayed by extracting a picture of the mobile terminal 200 based on the spatial relationship estimated by the spatial relationship acquisition unit 242 among the captured images created by the camera 130 of the wearable display 100 and by disposing it at the position of the mobile terminal 200 in the field of view in the real space (the position at which the mobile terminal 200 is visible when there is no display unit 110) in place of the content image 1102 or as being superimposed on the content image 1102.

Alternatively, when the display unit 110 can display a transparent picture in a superimposed manner on the field of view of the user, an image of the mobile terminal 200 in the real space is transmitted by increasing transmittance of the content image 1102 at the position of the mobile terminal 200 in the field of view of the real space, and thus it is possible for the content image 1102 to be interrupted by the mobile terminal 200'.

### (4-2. Interruption display of display picture)

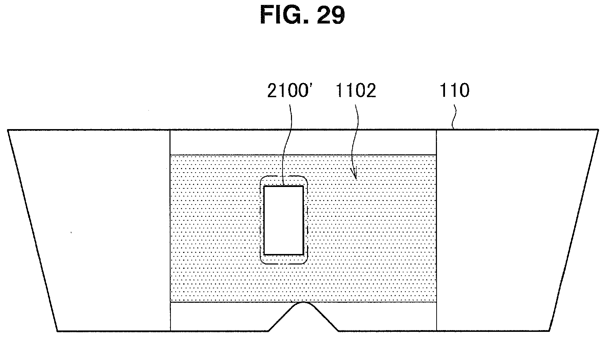

FIG. 29 is a diagram illustrating a display example of interruption to a display picture according to an embodiment of the present disclosure. In the illustrated example, when the content image 1102 that blocks the field of view of the user is displayed on the display unit 110 of the wearable display 100, a display picture 2100' of a mobile terminal is displayed by interruption.

The display picture 2100' is the picture displayed by extracting a picture of the picture 2100 displayed on the display unit 210 of the mobile terminal 200 based on the spatial relationship estimated by the spatial relationship acquisition unit 242 among the captured images created by the camera 130 of the wearable display 100 and by disposing the extracted picture at the position of the picture 2100 in the field of view in the real space (the position at which the display picture 2100 is visible when there is no display unit 110) in place of the content image 1102 or as being superimposed on the content image 1102.

In the above case, the display picture 2100', unlike the captured image created by the camera 130, may be redrawn in the display control unit 246 based on the estimated spatial relationship. In other words, the display control unit 246 may use, as the display picture 2100', a picture obtained by redrawing "the picture 2100 as viewed from the wearable display 100" based on data similar to that used to display the picture 2100 on the display unit 210. In this case, the display picture 2100' may be displayed more clear than the case of extracting from the captured image, and it may be possible to operate an operating element such as a link included in the display picture 2100'.

Alternatively, when the display unit 110 can display a transparent picture in a superimposed manner on the field of view of the user, an image of the display picture 2100 in the real space is transmitted by increasing transmittance of the content image 1102 at the position of the display picture 2100 in the field of view of the real space, and thus it is possible for the content image 1102 to be interrupted by the display picture 2100'.

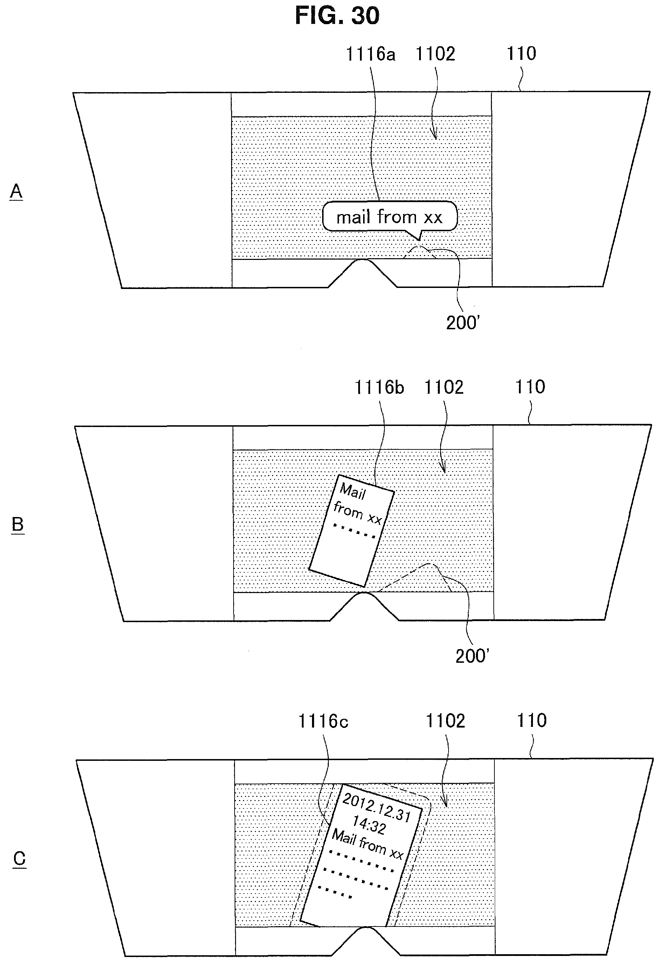

FIG. 30 is a diagram illustrating another example of an interruption display of a display picture according to an embodiment of the present disclosure. In the illustrated example, when the content picture 1102 that blocks the field of view of the user is displayed on the display unit 110 of the wearable display 100, an information window 1116 generated in relation to the display picture of a mobile terminal is displayed by interruption.

In the example shown in FIG. 30A, the content picture 1102 is interrupted by an information window 1116b to be displayed for indicating that there is an incoming message in the mobile terminal 200 with a portion displayed in the range of the content picture 1102 displayed on the display unit 110 (or far away from the wearable display 100). In the example shown in FIG. 30B, the content picture 1102 is interrupted by an information window 1116b to be displayed for indicating that there is an incoming message in the mobile terminal 200 with a slightly large portion displayed in the range of the content picture 1102 displayed on the display unit 110 (or middle away from the wearable display 100). In the example shown in FIG. 30C, the content picture 1102 is interrupted by an information window 1116c to be displayed for indicating that there is an incoming message in the mobile terminal 200 with a larger portion displayed in the range of the content picture 1102 displayed on the display unit 110 (or near the wearable display 100).

In the above example, the amount of information that is included in the information window 1116 increases as the mobile terminal 200 approaches the wearable display 100. In other words, in this example, the display control unit 246 allows the amount of information included in the information window 1116 that is a picture edited based on the picture 2100 displayed on the display unit 210 of the mobile terminal 200 to be changed depending on the spatial relationship between the wearable display 100 and the mobile terminal 200.

### (4-3. Interruption display of general object)

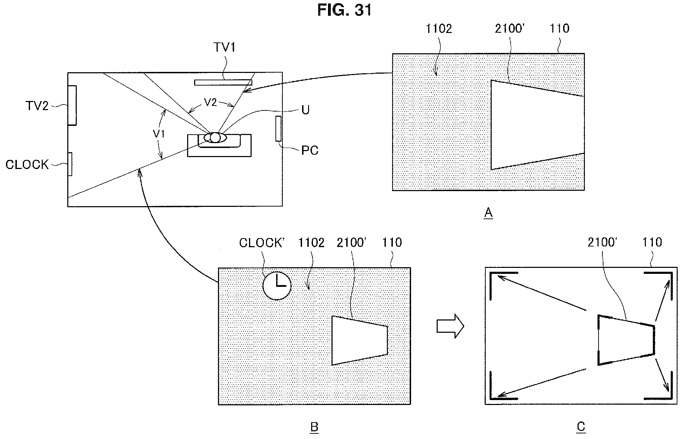

FIG. 31 is a diagram illustrating an example of an interruption display of a general object according to an embodiment of the present disclosure. In the illustrated example, when the content picture 1102 that blocks the field of view of the user is displayed on the display unit 110 of the wearable display 100, various object are displayed by interruption in the field of view of the user.

As one example, in FIG. 31A, a display picture 2100' of a television TV1 included in the field of view V2 of a user U is displayed by interruption on the content picture 1102. In FIG. 31B, the display picture 2100' of a television TV2 included in the field of view V1 of the user U and a picture CLOCK' of a clock CLOCK similarly included in the field of view V1 are displayed by interruption on the content picture 1102. Although not shown, for example, when a personal computer PC is within the field of view of the user U, a display picture of the PC is displayed by interruption on the content picture 1102.

As one example, when an interruption display is performed as shown in FIG. 31B, the display picture 2100' selected by the user's operation input is enlarged and deformed as shown in FIG. 31C and then may be displayed on the display unit 110 as a full screen view. The operation input mentioned above is not limited to the operation input performed through the mobile terminal 200 as the example described above, and the operation input may include an operation input using sound or gesture. Alternatively, the turning around of the user wearing the wearable display 100 may be determined using an acceleration sensor or the like. When it is determined that the user faces the television TV2, the display picture 2100' may be enlarged and displayed in a full screen view as described above.

In the above example, the selection of an object to be displayed by interruption among objects such as television and clock may be determined by the registration by the user in advance. When an object to be displayed by interruption is registered, an object, which is likely to be a target to be displayed by interruption on the picture displayed on the display unit 110, may be virtually displayed, and when the user selects a virtual display, the object may be set to be a target to be displayed by interruption.

For an object that is likely to be a target to be displayed by interruption, the spatial relationship of the object between the wearable display 100 and the mobile terminal 200 may be estimated based on the result obtained by analyzing a captured image created by the camera 130 and/or the detection result obtained by a depth sensor, which is similar to the mobile terminal 200 in the above example.

An object as a target to be displayed by interruption is not limited to a terminal device such as the mobile terminal 200 or a television, and the object may include a general object such as a clock. Furthermore, an object to be a target to be displayed by interruption may include a part of the body of the user itself wearing the wearable display 100 or other users.

The interruption display of various kinds of objects as described above is executed when a predetermined trigger is obtained. As one example, as shown in the example of FIG. 30, the interruption display may be executed by acquiring a notification received by a terminal device (the mobile terminal 200) to be displayed by interruption as a predetermined trigger. As an application to the examples of FIGS. 9 to 14, the interruption display may be executed by acquiring an operation input obtained by a terminal device (the mobile terminal 200) to be displayed by interruption as a predetermined trigger. Such operation input may be an operation input used to operate the wearable display 100.

Moreover, various triggers are set to execute the interruption display of an object. As one example, as the example shown in FIG. 31, the interruption display may be executed when each object is within the field of view of the user. Alternatively, the interruption display may be executed when each object makes any operation for the user. As one example, when another user is an object of an image to be displayed by interruption, the interruption display may be executed by acquiring a behavior of the other user talking to the user wearing the wearable display 100 as a trigger.

### (5. Supplement)

An embodiment of the present disclosure can include, for example, the above-described display control device (a mobile terminal, a wearable display, or a server), the above-described system, the above-described display control method executed in the display control device or the system, a program causing the display control device to function, and a non-transitory tangible medium having the program recorded thereon.

The preferred embodiment(s) of the present disclosure has/have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.
(1) A display control device including:
   a display control unit configured to control display of a picture on a display unit of a wearable display,
   wherein the display control unit executes
   processing of allowing the display unit to display a picture that blocks a field of view in a real space, and
   processing of allowing an image in the real space to selectively interrupt the picture when a predetermined trigger is acquired.
(2) The display control device according to (1),
   wherein the display control unit allows an image of an object in the real space to interrupt the picture.
(3) The display control device according to (2),
   wherein the object includes a terminal device different from the wearable display.
(4) The display control device according to (3),
   wherein the display control unit allows an image of the terminal device to interrupt the picture when the terminal device has received a notification.
(5) The display control device according to (3) or (4),
   wherein the display control unit allows an image of the terminal device to interrupt the picture when the terminal device has acquired an operation input.
(6) The display control device according to (5),
   wherein the display control unit allows the image of the terminal device to interrupt the picture when the terminal device has acquired an operation input for operating the wearable display.
(7) The display control device according to any one of (3) to (6),
   wherein the terminal device includes a display unit, and
   wherein the display control unit allows a display picture of the terminal device to interrupt the picture.
(8) The display control device according to (7),
   wherein the display control unit redraws the display picture and allows the redrawn display picture to interrupt the picture.
(9) The display control device according to any one of (3) to (6),
   wherein the display control unit allows a picture edited based on the display picture to interrupt the picture.
(10) The display control device according to (9), further including:
   a spatial relationship acquisition unit configured to acquire information indicating a spatial relationship between the wearable display and the terminal device,
   wherein the display control unit allows an amount of information included in the edited picture to be changed depending on the spatial relationship.
(11) The display control device according to any one of (2) to (10), further including:
   a spatial relationship acquisition unit configured to acquire information indicating a spatial relationship between the wearable display and the object,
   wherein the display control unit allows, based on the spatial relationship, the image of the object to interrupt the picture at a position corresponding to a position of the object in the field of view in the real space.
(12) The display control device according to (11),
   wherein the display unit is able to allow the field of view in the real space to be transmitted, and
   wherein display control unit allows the image of the object to interrupt the picture by increasing transmittance of the picture at the position corresponding to the position of the object in the field of view in the real space.
(13) The display control device according to (11), further including:
   an imaging unit configured to acquire a captured image of the real space,
   wherein the display control unit allows the image of the object to interrupt the picture by allowing a picture of the object extracted from the captured image to be displayed at the position corresponding to the position of the object in the field of view in the real space.
(14) The display control device according to (1), further including:
   an imaging unit configured to acquire a captured image of the real space,
   wherein the display control unit allows the image in the real space to interrupt the picture by allowing a picture of the real space extracted from the captured image to be displayed in place of at least a portion of the picture or in a superimposed manner on at least a portion of the picture.
(15) The display control device according to (14),
   wherein the display control unit allows the picture of the real space extracted from the captured image to be enlarged, reduced, or deformed to be displayed.
(16) A display control method including:
   allowing, by a processor configured to control display of a picture on a display unit of a wearable display, the display unit to display a picture that blocks a field of view in a real space; and
   allowing, by the processor, an image in the real space to selectively interrupt the picture when a predetermined trigger is acquired.
(17) A recording medium having a program recorded thereon, the program causing a computer configured to control display of a picture on a display unit of a wearable display to execute:
   a function of allowing the display unit to display a picture that blocks a field of view in a real space; and
   a function of allowing an image in the real space to selectively interrupt the picture when a predetermined trigger is acquired.

### Reference Signs List

- 10,20,30,40: system
- 100: wearable display
- 110: display unit
- 140: processor
- 200: mobile terminal
- 210: display unit
- 220: touch sensor
- 240: processor
- 300: server
- 320: processor
- 142, 242, 322: spatial relationship acquisition unit
- 144, 244, 324: operation acquisition unit
- 146, 246, 326: display control unit

## Claims

1. A display control device comprising:
a display control unit configured to control display of a picture on a display unit of a wearable display,
wherein the display control unit executes
processing of allowing the display unit to display a picture that blocks a field of view in a real space, and
processing of allowing an image in the real space to selectively interrupt the picture when a predetermined trigger is acquired.

2. The display control device according to claim 1,
wherein the display control unit allows an image of an object in the real space to interrupt the picture.

3. The display control device according to claim 2,
wherein the object includes a terminal device different from the wearable display.

4. The display control device according to claim 3,
wherein the display control unit allows an image of the terminal device to interrupt the picture when the terminal device has received a notification.

5. The display control device according to claim 3,
wherein the display control unit allows an image of the terminal device to interrupt the picture when the terminal device has acquired an operation input.

6. The display control device according to claim 5,
wherein the display control unit allows the image of the terminal device to interrupt the picture when the terminal device has acquired an operation input for operating the wearable display.

7. The display control device according to claim 3,
wherein the terminal device includes a display unit, and
wherein the display control unit allows a display picture of the terminal device to interrupt the picture.

8. The display control device according to claim 7,
wherein the display control unit redraws the display picture and allows the redrawn display picture to interrupt the picture.

9. The display control device according to claim 3,
wherein the display control unit allows a picture edited based on the display picture to interrupt the picture.

10. The display control device according to claim 9, further comprising:
a spatial relationship acquisition unit configured to acquire information indicating a spatial relationship between the wearable display and the terminal device,
wherein the display control unit allows an amount of information included in the edited picture to be changed depending on the spatial relationship.

11. The display control device according to claim 2, further comprising:
a spatial relationship acquisition unit configured to acquire information indicating a spatial relationship between the wearable display and the object,
wherein the display control unit allows, based on the spatial relationship, the image of the object to interrupt the picture at a position corresponding to a position of the object in the field of view in the real space.

12. The display control device according to claim 11,
wherein the display unit is able to allow the field of view in the real space to be transmitted, and
wherein display control unit allows the image of the object to interrupt the picture by increasing transmittance of the picture at the position corresponding to the position of the object in the field of view in the real space.

13. The display control device according to claim 11, further comprising:
an imaging unit configured to acquire a captured image of the real space,
wherein the display control unit allows the image of the object to interrupt the picture by allowing a picture of the object extracted from the captured image to be displayed at the position corresponding to the position of the object in the field of view in the real space.

14. The display control device according to claim 1, further comprising:
an imaging unit configured to acquire a captured image of the real space,
wherein the display control unit allows the image in the real space to interrupt the picture by allowing a picture of the real space extracted from the captured image to be displayed in place of at least a portion of the picture or in a superimposed manner on at least a portion of the picture.

15. The display control device according to claim 14,
wherein the display control unit allows the picture of the real space extracted from the captured image to be enlarged, reduced, or deformed to be displayed.

16. A display control method comprising:
allowing, by a processor configured to control display of a picture on a display unit of a wearable display, the display unit to display a picture that blocks a field of view in a real space; and
allowing, by the processor, an image in the real space to selectively interrupt the picture when a predetermined trigger is acquired.

17. A recording medium having a program recorded thereon, the program causing a computer configured to control display of a picture on a display unit of a wearable display to execute:
a function of allowing the display unit to display a picture that blocks a field of view in a real space; and
a function of allowing an image in the real space to selectively interrupt the picture when a predetermined trigger is acquired.
